# EUROPÄISCHE PATENTSCHRIFT

(11) **EP 1 994 084 B1**
(45) Veröffentlichungstag und Bekanntmachung des Hinweises auf die Patenterteilung: **27.01.2010**
(21) Anmeldenummer: 07712417.0
(22) Anmeldetag: 02.03.2007
(51) Int. Cl.: C08J 7/04, C09D 183/04, B05D 7/02, B05D 1/36

(54) **OHNE PRIMER VERKLEBBARE THERMISCH GEHÄRTETE SILIKONBESCHICHTUNG**
THERMALLY CURED SILICONE COATING WHICH CAN BE ADHESIVELY BONDED WITHOUT PRIMER
REVETEMENT DE SILICONE DURCI THERMIQUEMENT COLLABLE SANS AMORCE

(30) Priorität: 02.03.2006 EP 06110598
(43) Veröffentlichungstag der Anmeldung: 26.11.2008
(73) Patentinhaber: Sika Technology AG, 6340 Baar (CH)
(72) Erfinder: HUCK, Wolf-Rüdiger, CH-8044 Zürich (CH); DOHNER, Reto, CH-8005 Zürich (CH)
(74) Vertreter: Sika Patent Attorneys
(86) Internationale Anmeldenummer: PCT/EP2007/051974
(87) Internationale Veröffentlichungsnummer: WO 2007/099157

(56) Entgegenhaltungen:
- EP-A- 0 877 068
- EP-A- 1 382 625
- WO-A-01/91923
- WO-A-2006/024662

## Beschreibung

### Technisches Gebiet

Die Erfindung betrifft das Gebiet der thermisch gehärteten Silikonbeschichtungen auf Kunststoffen sowie die Verfahren zu deren Herstellung und Verkleben und Abdichten.

### Stand der Technik

Kunststoffe, insbesondere thermoplastische Kunststoffe, werden seit längerem verwendet. Deren Einsatz ist jedoch mit einigen Nachteilen verbunden. Infolge ihrer Weichheit sind sie sehr anfällig auf Kratzer. Diese ist insbesondere bei sichtbaren und/oder exponierten Teilen aus Kunststoffen sehr nachteilig. Viele dieser Kunststoffe sind durchsichtig und werden deshalb vielfach als Ersatz von Glas als Scheiben oder Abdeckungen verwendet. Bei diesen Anwendungen sind Kratzer ebenfalls sehr nachteilig, da das Licht durch die Kratzer abgelenkt werden und diese Scheiben dadurch unklar bis trüb werden können.

Um diese Nachteile derartiger Kunststoffe zu beheben wurden sie seit längerem mit kratzfesten Silikonzusammensetzungen beschichtet. Solche Silikonzusammensetzungen werden auf die Kunststoffe aufgebracht und eingebrannt. Diese thermisch gehärteten Silikonbeschichtungen sind dem Fachmann auch unter dem englischen Term "Silicone Hard Coats" bekannt. Beispielsweise offenbaren solche Beschichtungen US 5,041,313, US 4,624,870 und EP 0 570 165 A2 oder G. Medford et al. in "The Next Generation in Weatherable Hardcoats for Polycarbonate", International Coatings for Plastics Symposium, 4.-6. Juni 2001, Troy , MI. Vielfach sind Formteile aus solchen mit thermisch gehärteten Silikonbeschichtungen behandelten Kunststoffen jedoch mit anderen Formteilen zu verbinden. Infolge der bekannten Vorteile der Klebtechnologie ist es erwünscht, diese Teile zu verkleben, beziehungsweise abzudichten. Es hat sich jedoch gezeigt, dass solche beschichteten Teile sehr schwierig mit üblichen Klebstoffen, bzw. Dichtstoffen, insbesondere mit einkomponentigen Polyurethanklebstoffen- oder Dichtstoffen, zu verkleben bzw. abzudichten sind.

EP 1 382 625 A1 löst dieses Problem durch den Einsatz eines speziellen Isocyanat-haltigen Primers mit guter Haftung auf Kunststoffen wie Poly(methylmethacrylat) oder Polycarbonat welche Polydimethylsiloxanbasierende Beschichtungen aufweisen (PDMS-PMMA oder PDMS-PC). Nachteilig hierzu ist jedoch, dass in der Fertigungslinie, wo solche Formteile eingesetzt werden, ein zusätzlicher Schritt, nämlich das Auftragen des Primers, nötig wird. Jedoch noch nachteiliger ist, dass durch das notwendige Ablüften, d.h. Zeit zwischen Auftragen des Primers und Auftragen des Klebstoffes, bzw. des Dichtstoffes, bedingt, eine Wartezeit entsteht, was für eine kontinuierliche Fertigung beispielsweise ein Zwischenlager bedingt. Weiterhin führen die üblicherweise in Primern vorhanden Lösungsmittel vielfach zu Spannungsrisskorrosion (Stress cracking).

### Darstellung der Erfindung

Aufgabe der vorliegenden Erfindung ist es daher, eine thermisch gehärtete Silikonbeschichtung auf einem Kunststoff, insbesondere auf einem thermoplastischen Kunststoff, zur Verfügung zu stellen, welche primerlos mit einem Klebstoff zu verkleben, bzw. mit einem Dichtstoff abzudichten, ist.

Unter "primerlos" zu verkleben, bzw. abzudichten, ist hier und im Folgenden die Eigenschaft der Verklebbarkeit, bzw. Abdichtbarkeit, ohne die Verwendung eines Klebstoffprimers während dem Verklebungsprozess, bzw. dem Abdichtprozess, zu verstehen.

Überraschenderweise wurde nun gefunden, dass eine solche Beschichtung durch ein Verfahren gemäss Anspruch 1 erreicht werden kann.

### Wege zur Ausführung der Erfindung

Die vorliegende Erfindung betrifft ein Verfahren zur Herstellung einer thermisch gehärteten Silikonbeschichtung auf einem Kunststoff. Dieses Verfahren umfasst die Schritte
- Aufbringen einer Silikonzusammensetzung auf die Oberfläche eines Kunststoffes oder auf die Oberfläche eines mit einem Kunststoffprimer behandelten Kunststoffes
- Ablüften der Silikonzusammensetzung unter Bildung eines Silikonfilms
- Einbrennen bei einer Temperatur zwischen 80°C und 200°C
- Auftragen einer Haftvermittlerzusammensetzung auf den Silikonfilm während dem Einbrennen oder während der Abkühlphase auf Umgebungstemperatur nach dem Einbrennen.

Die Silikonzusammensetzung umfasst typischerweise eine Dispersion einer kolloidalen Kieselsäure in einem Gemisch von Wasser und einem organischen Lösungsmittel und mindestens einem Trialkoxysilan RSi(OR')₃ oder dessen Silanol RSi(OR')₃₋ₙ(OH)ₙ oder Teilkondensate davon. Hierbei stellt R einen Alkyl-Substituenten mit 1-3 Kohlenstoffatomen oder einen Arylsubstituenten mit 6 bis 13 Kohlenstoffatomen dar, R' stellt einen Alkylsubstituenten mit 1-3 Kohlenstoffatomen dar und n stellt 1, 2 oder 3 dar. Bevorzugt ist R eine Methylgruppe. Ebenfalls bevorzugt ist R' eine Methylgruppe. Detaillierte Herstellungsmethoden der Silikonzusammensetzungen sowie der daraus hergestellten thermisch gehärteten Silikonbeschichtungen sind beispielsweise in den Patentschriften US 4,373,061, US 4,624,870, US 5,869,185 und US 5,041,313 beschrieben und werden somit als durch Referenz eingebundener Bestandteil der vorliegenden Erfindung betrachtet. Der Festkörperanteil der Silikonzusammensetzung beträgt typischerweise von 10 bis 30 Gew.-%, insbesondere von 15 bis 25 Gew.-%. Weiterhin ist der pH der Silikonzusammensetzung vorzugsweise zwischen 6 und 8.5, insbesondere zwischen 6.5 - 8. Ein bevorzugter Bestandteil der Silikonzusammensetzung ist ein alkoxysilylierter UV-Absorber, insbesondere solche, wie sie in den in diesem Abschnitt genannten Patente erwähnt sind. Geeignete Silikonzusammensetzungen sind auf dem Markt kommerziell als Beschichtungsmittel für die Herstellung von thermisch gehärteten Silikonbeschichtungen (Hard Coats), beispielsweise von PPG Industries Ohio als Resilient oder von GE Silicones als PHC587, AS4000 oder AS4700 oder von SDC Technologies Inc. als CrystalCoat® oder Supercoat sowie ähnliche Systeme, wie sie von Fujikura Kasei oder von KRD Coatings GmbH unter dem Handelsnamen Kasi® Flex oder Ormocer® von T_O_P Oberflächen GmbH, vertrieben werden, erhältlich.

Der Kunststoff, auf den die Silikonzusammensetzung aufgebracht wird, ist grundsätzlich jeder bekannte Kunststoff. Beispielsweise können dies duroplastische oder thermoplastische Kunststoffe sein. Besonders geeignet sind jedoch thermoplastische Kunststoffe. Besonders geeignet sind solche thermoplastischen Kunststoffe, die während dem Einbrennen ihre Form nicht oder nicht wesentlich verändern. Somit sollten die thermoplastischen Kunststoffe eine Glasübergangstemperatur von vorzugsweise über 100°C, insbesondere von über 120°C, aufweisen.

Vorzugsweise ist der Kunststoff transparent.

Besonders geeignete thermoplastische Kunststoffe sind einerseits Homo- oder Copolymere von Monomeren ausgewählt aus der Gruppe umfassend Methacrylsäure, Acrylsäure, Methacrylsäureester, Acrylsäureester, Styrol sowie deren beliebige Mischungen. Bevorzugt unter diesen Homo- oder Copolymeren ist Poly(methylmethacrylat).

Andererseits besonders geeignet sind Polycarbonate, insbesondere auf Bisphenol-A-basierend, sowie amorphe Polyester, wie PETG oder PET.

Bevorzugt werden aromatische thermoplastische Kunststoffe, insbesondere aromatische Polycarbonate wie solche, die unter dem Namen Lexan® polycarbonate von General Electric Company oder unter dem Namen Makrolon® von Bayer vertrieben werden.

Je nach Anwendung können auch andere thermoplastische Kunststoffe oder deren Blends verwendet werden, wie beispielsweise Polyphenylenether, Polyetherimide, Polyester, Polyamide oder Polysulfone.

Die Haftvermittlerzusammensetzung umfasst vorzugsweise mindestens eine Organo-Siliziumverbindung und/oder mindestens eine Organo-Titanverbindung. Die Organo-Siliziumverbindung weist hierbei mindestens eine an ein Siliziumatom gebundene Alkoxygruppe oder Acyloxygruppe sowie mindestens einen über eine Kohlenstoff-Silizium-Bindung an ein Siliziumatom gebundenen organischen Substituenten auf. Die Organo-Titanverbindung weist hierbei mindestens einen über eine Sauerstoff-Titan-Bindung an das Titanatom gebundenen Substituenten aufweist, auf.

Als Organo-Siliziumverbindungen sind besonders geeignet Organo-Siliziumverbindungen der Formeln Formel (I) oder (II) oder (III)

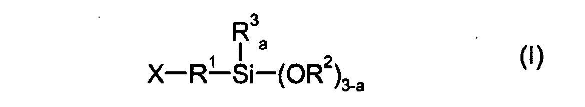

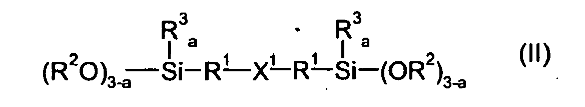

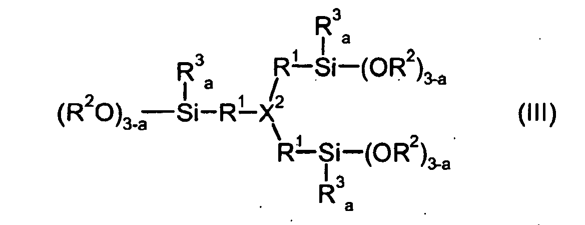

R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehrere Heteroatomen, insbesondere Stickstoffatomen.

R² steht hierbei für eine Alkylgruppe mit 1 bis 5 C-Atomen, insbesondere für Methyl oder Ethyl, oder für eine Acylgruppe.

R³ steht hierbei für eine Alkylgruppe mit 1 bis 8 C-Atomen, insbesondere Methyl.

X steht hierbei für ein H, oder eine funktionelle Gruppe, welche ausgewählt ist aus der Gruppe umfassend Oxiran, OH, (Meth)acryloxy, Amin, SH, Acylthio und Vinyl, bevorzugt Amin, steht. Der Vollständigkeit halber wird erwähnt, dass unter Acylthio in diesem Dokument der Substituent 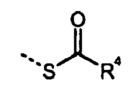 verstanden wird, wobei R⁴ für Alkyl, insbesondere mit 1 bis 20 Kohlenstoffatomen, steht und die gestrichelte Linie die Bindung zum Substituent R¹ darstellt.

X¹ steht hierbei für eine funktionelle Gruppe, welche ausgewählt ist aus der Gruppe umfassend NH, S, S₂ und S₄.

X² steht hierbei für eine funktionelle Gruppe, welche ausgewählt ist aus der Gruppe umfassend N und Isocyanurat.

a steht hierbei für einen der Werte 0, 1 oder 2, bevorzugt 0.

Der Substituent R¹ bedeutet insbesondere eine Methylen-, Propylen-, Methylpropylen-, Butylen- oder Dimethylbutylengruppe. Besonders bevorzugt wird als Substituent R¹ eine Propylengruppe.

Amino-, Mercapto- oder Oxiran-Gruppen aufweisenden Organo-Siliziumverbindungen werden auch als "Aminosilane", "Mercaptosilane" oder "Epoxysilane" bezeichnet.

Als Organo-Siliziumverbindungen der Formel (I) sind beispielsweise geeignet die Organo-Siliziumverbindungen ausgewählt aus der Gruppe umfassend Octyltrimethoxysilan, Dodecyltrimethoxysilan, Hexadecyltrimethoxysilan, Methyl-octyldimethoxysilan; 3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan; 3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan, N-(Methyl)-3-aminopropyltrimethoxysilan, N-(n-butyl)-3-aminopropyltrimethoxysilan; 3-Mercaptopropyltriethoxysilan, 3-Mercaptopropyltrimethoxysilan, 3-Mercaptopropyl-methyldimethoxysilan; 3-Acylthiopropyltrimethoxysilan; Vinyltrimethoxysilan und Vinyltriethoxysilan.

Auch bevorzugt sind die gerade genannten Organo-Siliziumverbindungen, deren Alkoxygruppen durch Acetoxygruppen ersetzt sind, wie zum Beispiel Octyltriacetoxysilan (Octyl-Si(O(O=C)CH₃)₃). Derartige Organo-Siliziumverbindungen spalten Essigsäure bei der Hydrolyse ab.

Bevorzugt sind bei diesen genannten Organo-Siliziumverbindungen diejenige, welche einen an das Siliziumatom gebundenen organischen Substituenten aufweisen, welcher zusätzlich noch eine funktionelle Gruppe aufweist, das heisst, welcher keine Alkylgruppe ist, und einer Formel (I) entsprechen, in welcher X nicht H ist.

Als Organo-Siliziumverbindungen der Formel (II) sind geeignet beispielsweise die Organo-Siliziumverbindungen ausgewählt aus der Gruppe umfassend Bis-[3-(trimethoxysilyl)-propyl]-amin, Bis-[3-(triethoxysilyl)-propyl]-amin, 4,4,15,15-Tetraethoxy-3,16-dioxa-8,9,10,11-tetrathia-4-15-disilaoctadecan (Bis(triethoxysilylpropyl)polysulfid oder Bis(triethoxysilylpropyl)tetrasulfan), Bis(triethoxysilylpropyl)disulfid.

Als Organo-Siliziumverbindungen der Formel (III) sind geeignet beispielsweise die Organo-Siliziumverbindungen ausgewählt aus der Gruppe umfassend Tris-[3-(trimethoxysilyl)-propyl]-amin, Tris-[3-(triethoxysilyl)-propyl]-amin, 1,3,5-tris-[3-(trimethoxysilyl)propyl]-1,3,5-triazine-2,4,6(1H,3H,5H)-trion-harnstoff (=Tris-(3-(trimethoxysilyl)propyl)isocyanurat) und 1,3,5-tris[3-(triethoxysilyl)propyl]-1,3,5-triazine-2,4,6(1H,3H,5H)-trion-harnstoff (=Tris(3-(triethoxysilyl)propyl)isocyanurat).

Bevorzugt als Organo-Siliziumverbindungen sind Aminosilane, insbesondere Aminosilane mit X = NH₂ oder NH₂-CH₂-CH₂-NH, X¹ = NH und X² = N. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander. Es hat sich gezeigt, dass insbesondere mit Aminosilanen, besonders bei den in diesem Abschnitt erwähnten Aminosilanen, die Mikrorissbildung der thermisch gehärteten Silikonbeschichtung reduziert wird.

Als über eine Sauerstoff-Titan-Bindung an das Titanatom gebundenen Substituenten sind besonders geeignete Substituenten sind diejenigen, welche aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind.

Besonders geeignet sind Verbindungen, bei denen alle an das Titan gebundene Substituenten aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.

Als Alkoxygruppen haben sich insbesondere sogenannte Neoalkoxy-Substituenten, insbesondere der folgenden Formel (IV) besonders geeignet erwiesen

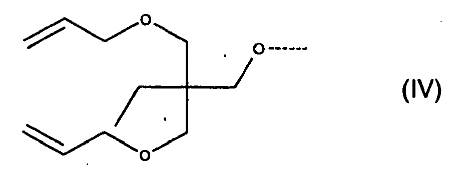

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel (V)

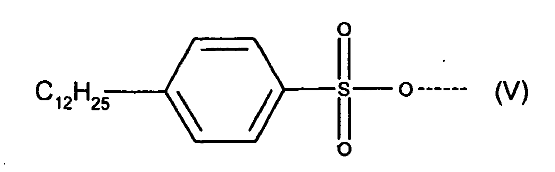

Als Carboxylatgruppen haben sich insbesondere Carboxylate von Fettsäuren besonders geeignet erwiesen. Als bevorzugte Carboxylate gilt Decanoat.

In allen den obigen Formel zeigt die gestrichelte Bindung hierbei die Sauerstoff-Titan-Bindung an.

Organo-Titanverbindungen sind kommerziell erhältlich, beispielsweise bei der Firma Kenrich Petrochemicals oder DuPont. Beispiele für geeignete Organo-Titanverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TPT, NPT, BTM, AA, AA-75, AA-95, AA-105, TE, ETAM, OGT von DuPont. Bevorzugt gelten Ken-React® KR 7, KR 9S, KR 12, KR 26S, KR 38S, KR44, LICA 09, LICA 44, NZ 44, sowie Tyzor® ET, TPT, NPT, BTM, AA, AA-75, AA-95, AA-105, TE, ETAM von DuPont.

Als besonders bevorzugt sind Organo-Titanverbindungen mit über eine Sauerstoff-Titan-Bindung an das Titanatom gebundenen Substituenten der Formeln (IV) und/oder (V).

Bevorzugt umfasst die Haftvermittlerzusammensetzung mindestens eine Organo-Siliziumverbindung und mindestens eine Organo-Titanverbindung.

Die Haftvermittlerzusammensetzung kann weiterhin mindestens ein Lösungsmittel umfassen. Als Lösungsmittel sind besonders solche bevorzugt, die weder mit dem Kunststoff noch mit dem allenfalls vorhandenen Kunststoffprimer zu Spannungsrissbildung führen. Die Verwendung eines Lösungsmittels kann Vorteile in Bezug auf die Benetzung haben.

In einer Ausführungsform eignen sich als Lösungsmittel insbesondere leicht flüchtige Lösungsmittel, das heisst solche mit einem Siedepunkt bei 760 Torr von zwischen 25°C und 140°C, insbesondere von zwischen 50°C und 120°C, bevorzugt von zwischen 65 und 99°C.

In einer anderen Ausführungsform eignen sich insbesondere weniger flüchtige Lösungsmittel, das heisst solche Lösungsmittel, welche einen Siedepunkt bei 760 Torr über der Einbrenntemperatur aufweisen. Insbesondere weisen sie einen Siedepunkt von ≥ 100°C, vorzugsweise zwischen 100°C und 200°C, bevorzugt zwischen 140°C und 200°C, auf.

Weiterhin hat es sich gezeigt, dass insbesondere Mischungen verschiedener Lösungsmittel vorteilhaft sind. Als besonders geeignet hat sich gezeigt, wenn Mischungen von Kohlenwasserstoffen untereinander oder Mischungen mindestens eines Kohlenwasserstoffes mit mindestens eines polaren Lösungsmittel, welches mindestens ein Heteroatom in seiner Strukturformel aufweist, verwendet werden. Der Kohlenwasserstoff kann gesättigt oder olefinisch oder aromatisch ungesättigt sein. Bevorzugt ist der Kohlenwasserstoff gesättigt. Als Heteroatom im polaren Lösungsmittel sind insbesondere O, N und S als geeignet zu betrachten. Bevorzugt ist das mindestens eine Heteroatom ein Sauerstoffatom, was besonders bevorzugt in Form von Hydroxyl-, Carbonyl-, Ether-, Carbonsäure- oder Carbonsäurederivat-Gruppen, wie beispielsweise Ester-, Amid- oder Carboxylat-Gruppe, in der Strukturformel des polaren Lösungsmittel vorliegt. Bevorzugte polare Lösungsmittel sind Wasser, Alkohole und Ketone. Meist bevorzugte polare Lösungsmittel sind Alkohole, insbesondere gesättigte, verzweigte oder lineare oder cyclische Alkohole mit 1 bis 8 Kohlenstoffatomen.

Bevorzugt als Lösungsmittel sind Alkohole und aliphatische und cycloaliphatische Kohlenwasserstoffe, insbesondere Ethanol, Isopropanol, Hexan, Cyclohexan, Heptan oder Octan, sowie deren Mischungen. Bevorzugt ist das Lösungsmittel Ethanol oder Heptan.

Als besonders bevorzugt gelten Lösungsmittelgemische, eines Alkohols und eines aliphatischen oder cycloaliphatischen Kohlenwasserstoffes, insbesondere solche von Ethanol oder Isopropanol mit Hexan oder Cyclohexan oder Heptan oder Octan, sowie deren Mischungen. Als besonders bevorzugte Lösungsmittelmischung hat sich die Mischung von Ethanol und Heptan gezeigt.

Als weniger flüchtige Lösungsmittel gelten insbesondere Kohlenwasserstoffe wie Toluol, Xylol oder einer Kohlenwasserstoffmischung mit einem Siedepunkt zwischen 120°C und 20.0°C, insbesondere zwischen 12o°C und 140°C.

Unter Verwendung eines solchen Lösungsmittels kann erreicht werden, dass homogen kleine Konzentrationen an Haftvermittlersubstanzen, d.h. an Organo-Siliziumverbindung und/oder Organo-Titanverbindung, auf den aufgetragen werden können. Der Gehalt an Lösungsmittel ist vorzugsweise derart gewählt, dass der Gehalt an Organo-Siliziumverbindung und / oder Organo-Titanverbindung von 0.1 bis 10 Gew.-%, insbesondere zwischen 0.5 bis 10 Gew.-%, aufweist.

Es kann jedoch durchaus auch vorteilhaft sein, dass die Haftvermittlerzusammensetzung keine Lösungsmittel enthält und der Gehalt von Organo-Siliziumverbindung und/oder Organo-Titanverbindung von mehr als 90 Gew.-%, insbesondere von mehr als 99 Gew.-%, beträgt. Beispielsweise können hiermit durch VOC-Vorschriften auferlegte Limitierungen oder Nachteile vermieden werden, oder es können allenfalls durch Lösungsmittel bedingte Eigenschaftsänderung des Silikonfilms ausgeschlossen werden.

Die Haftvermittlerzusammensetzung kann weitere Bestandteile umfassen. Besonders geeignet als weitere Bestandteile sind UV-Absorber sowie optische Aufheller. Optische Aufheller können beispielsweise zur Qualitätskontrolle genutzt werden, d.h. es kann als Tracer mittels Kontrolle von UV-Licht festgestellt werden, ob bei der Herstellung der thermisch gehärteten Silikonbeschichtung der Auftrag der Haftvermittlerzusammensetzung erfolgt ist oder nicht. Solche optischen Aufheller absorbieren UV-Licht und emittieren sichtbares, normalerweise blaues Licht. Ein bevorzugter optischer Aufheller stellt Ciba Uvitex® OB von Ciba Speciality Chemicals dar. Weitere geeignete Aufheller sind beispielsweise in Kirk-Othmer, "Encyclopedia of Chemical Technology", 4th Ed, John Wiley & Sons, New York, Vol. 11, S. 227-241 angebeben.

Da das Material sowie die thermisch gehärtete Beschichtung darauf vielfach transparent sind, können UV-Absorber dazu eingesetzt werden, dass ein mit der gehärteten Silikonbeschichtung verbundener Klebstoff bzw. Dichtstoff vor UV-Strahlung geschützt werden kann, welches durch das Kunststoffmaterials sowie die darauf befindliche thermisch gehärtete Silikonbeschichtung gelangt. Ein solcher UV-Schutz ist vor allem für Polyurethanklebstoffe oder -dichtstoffe sehr vorteilhaft. Die UV-Absorber können beispielsweise organischer Natur sein, wie beispielsweise solche aus der Tinuvin® -Produktelinie von Ciba Speciality Chemicals, oder sie können anorganischer Natur sein, wie beispielsweise Farbpigmente, insbesondere Russ oder Titandioxid.

Es ist bevorzugt, wenn die Haftvermittlerzusammensetzung frei von Isocyanatgruppen-aufweisenden Verbindungen ist. Es wurde nämlich festgestellt, dass die Anwesenheit solcher Isocyanatgruppen-aufweisende Verbindungen in der Haftvermittlerzusammensetzung zu mechanischen Schwachstellen der damit hergestellten thermisch gehärteten Silikonbeschichtung führt.

Die Silikonzusammensetzung kann auf verschiedenste dem Fachmann bekannte Auftragsarten wie Sprühen, Eintauchen, Rollbeschichtung, Bepinselung und so weiter, appliziert werden. Die Trockenfilmschichtdicke der Silikonzusammensetzung beträgt vorzugsweise etwa zwischen 5 und 15 Mikrometer. Es ist möglich, dass mehrere Schichten nacheinander aufgetragen werden.

Weiterhin kann es nötig sein, dass vor dem Auftragen der Silikonbeschichtung ein Kunststoffprimer auf den Kunststoffes aufgebracht werden muss, um eine gute Haftung der Silikonzusammensetzung auf dem Kunststoff zu gewährleisten. Typischerweise ist die Schichtdicke eines solchen Kunststoffprimers 0.1 bis 3 Mikrometer. Unter einem Kunststoffprimer' wird hier und im gesamten vorliegenden Dokument ein Primer verstanden, welcher auf einen Kunststoff vor dem Aufbringen einer Silikonzusammensetzung aufgetragen wird.

Weiterhin kann es von Vorteil sein, eine Zwischenschicht mit UVabschirmenden Substanzen oder Farben anzubringen. Solche Zwischenschichten können auch lediglich aus ästhetischen oder dekorativen Gesichtspunkten erwünscht sein.

Falls Zwischenschichten eingesetzt werden, können diese auch lediglich an gewissen Oberflächenstellen des Kunststoffes, beziehungsweise der darauf haftenden Schichten, erfolgen und müssen nicht zwangsweise vollflächig vorhanden sein. Als Bespiel hierfür ist eine Polycarbonatscheibe eines Automobils mit einer Abdeckzwischenschicht am Rand der Scheibe, wo der Klebstoff die Scheibe mit dem Karosserieflansch oder dem Alu- oder KTL-Stahl-Rahmen verklebt, erwähnt.

Die Silikonzusammensetzung muss abgelüftet werden Das heisst, es muss eine gewisse Zeit verstreichen, bis weitere Arbeitsschritte erfolgen können. In dieser Zeit bildet die Silikonzusammensetzung einen Film aus. Typischerweise erfolgt hier ein zumindest ein teilweises Abtrocknen durch Verdampfen eines Lösungsmittels oder eines Lösungsgemisches und/oder eine Vorreaktion der reaktiven Bestandteile der Silikonzusammensetzung. Die Länge dieser Ablüftezeit und Umfang des Ablüftens ist sehr variabel und sehr abhängig von den Details der Formulierung der Silikonzusammensetzung und der Geometrie und Grösse des Bauteils. Sie ist aber mindestens so lange, bis die Silikonzusammensetzung einen Film, im Folgenden Silikonfilm genannt, gebildet hat. Diese Länge kann allenfalls durch Anblasen mit Luft, vor allem warmer Luft, oder mittels leichtem Erwärmen (aber deutlich unter der Einbrenntemperatur) des Polymers innerhalb eines bestimmten Rahmens verkürzt werden. Typischerweise beträgt die Ablüftezeit jedoch mindestens 5 Minuten. Bevorzugt beträgt die Ablüftezeit zwischen 5 Minuten und 60 Minuten, insbesondere zwischen 5 und 30 Minuten, bevorzugt zwischen 5 bis 25 Minuten.

Anschliessend wird die Beschichtung bei einer Temperatur von zwischen 80°C und 200°C eingebrannt. Die Einbrenntemperatur und -Dauer ist vorzugsweise auf die Silikonzusammensetzung und den Kunststoff abgestimmt. Weiterhin ist die Einbrennzeit abhängig von Geometrie und Grösse des Bauteils.

Üblicherweise erfolgt das Einbrennen bei einer Temperatur zwischen 100 und 140 °C, insbesondere zwischen 120 und 130°C, typischerweise während einer Einbrenndauer zwischen 30 und 90 Minuten, insbesondere zwischen 40 und 60 Minuten. Es kann von Vorteil sein, dass die Einbrenntemperatur während dem Einbrennprozess nicht konstant ist, sondern einem Temperaturprofil folgt. Das Einbrennen erfolgt üblicherweise in Öfen. Weitere Details zum Einbrennen von Silikonzusammensetzungen zur Herstellung von thermisch gehärteten Silikonbeschichtungen auf einem Kunststoff sind dem Fachmann aus den bereits bei der Beschreibung der Silikonzusämmensetzungen genannten Stand der Technik bekannt.

Nach dem Einbrennen erfolgt ein Abkühlen der Beschichtung auf Umgebungstemperatur.

Durch den Einbrennprozess wird die Silikonbeschichtung gehärtet, das heisst, die Silikonbeschichtung härtet aus und bildet ein Netzwerk. Wenn auch derzeit keine experimentellen Beweise vorliegen, wird davon ausgegangen, dass eine wie vorgängig beschrieben erfindungsgemässe thermisch gehärtete Silikonbeschichtung oberflächennah im Vergleich eine grössere Konzentration an Haftvermittlerzusammensetzung aufweist, als sie nahe an der Grenzfläche Silikonbeschichtung zu Kunststoff ist.

Während dem Einbrennen oder während der Abkühlphase auf Umgebungstemperatur, d.h. unmittelbar nach dem Einbrennen, wird die Haftvermittlerzusammensetzung auf den Silikonfilm aufgetragen. In diesem Kontext ist dem Fachmann natürlich klar dadurch, dass das Einbrennen zumindest teilweise bereits begonnen hat, und dass zum Zeitpunkt des Einbrennens der Silikonfilm bereits teilweise oder ganz thermisch gehärtet sein kann. Das Auftragen der Zusammensetzung kann grundsätzlich auf sehr unterschiedliche Art erfolgen. Bevorzugte Applikationsart ist das Aufwalzen, Applizieren mittels Filz oder Schwamm. Allenfalls kann hierfür eine Maske verwendet werden, um gezielt ein Muster zu applizieren oder gezielt einen Teilbereich zu behandeln. Die Menge der aufgetragenen Haftvermittlerzusammensetzung variiert als Folge des gegebenenfalls vorhandenen Lösungsmittel sehr stark. Bevorzugt wird die Haftvermittlerzusammensetzung in einer Menge von zwischen 5 und 200 g/m², insbesondere zwischen 10 und 100 g/m², auf den Silikonfilm aufgetragen. Es ist zu bevorzugen, dass 0.02 bis 40 g/m², insbesondere 0.1 bis 20 g/m², bevorzugt 0.5 bis 10 g/m², an Organo-Siliziumverbindung und / oder Organo-Titanverbindung auf den Silikonfilm aufgetragen wird.

Der Haftvermittlerzusammensetzungs-Auftrag kann auch in zwei oder mehreren aufeinander folgenden Schritten erfolgen. Bevorzugt liegt zwischen zwei aufeinanderfolgenden Haftvermittlerzusammensetzungs-Aufträgen eine Zeit von 10 Sekunden bis 1 Minute. Mittels mehrmaligen Haftvermittlerzusammensetzungs-Aufträgen kann einfach eine höhere Konzentration an Haftvermittlersubstanz, d.h. an Organo-Siliziumverbindung und / oder Organo-Titanverbindung, homogen aufgetragen werden.

Es wurde festgestellt, dass auch der Auftrag der Haftvermittlerzusammensetzung während der Abkühlphase nach dem Einbrennen zu einer Haftungsverbesserung führt.

Es ist dem Fachmann klar, dass jedoch der Auftrag vorzugsweise in einem frühen Stadium der Abkühlphase, insbesondere im ersten Drittel, erfolgen sollte und die Oberflächentemperatur beim Auftrag insbesondere höher als 60°C, vorzugsweise höher als 100°C, betragen sollte.

Es ist bevorzugt, dass der Auftrag der Haftvermittlerzusammensetzung während des Einbrennens erfolgt. Insbesondere erfolgt der Auftrag während der ersten Hälfe, insbesondere während dem ersten Drittel, der Einbrenndauer, bevorzugt im Zeitfenster zwischen 1. Minute und der 30. Minuten der Einbrenndauer.

Die thermisch gehärteten Silikonbeschichtungen weisen eine ausgezeichnete Langzeitstabilität aus und neigen insbesondere zu keiner oder lediglich geringer Spannungsrissbildung, wodurch eine Langlebigkeit der Beschichtung gewährleistet werden kann.

Eine derartig hergestellte thermisch gehärtete Silikonbeschichtung ist überraschenderweise bestens geeignet zum primerlosen Verkleben oder Abdichten mit diversen Kleb- oder Dichtstoffen.

Haftung ohne die Verwendung eines Klebstoffprimers ist nicht gegeben, wenn Silikonbeschichtungen ohne den Schritt des Auftragens von Haftvermittlerzusammensetzung auf den Silikonfilm hergestellt werden. Unter einem "Klebstoffprimer" wird hier und im gesamten Dokument ein Primer verstanden, welcher auf eine thermisch gehärtete Silikonbeschichtung gebracht wird, auf welchen ein Klebstoff oder Dichtstoff appliziert wird oder werden kann.

Die Haftung ist zwar gegeben, wenn die Haftvermittlerzusammensetzung entweder vor dem Einbrennen oder auf eine auf Raumtemperatur abgekühlte und gelagerte thermisch gehärtete Silikonbeschichtung appliziert wird. In beiden Fällen ist jedoch die Lagerzeit ("t_{L}") der Beschichtung, während der ein Haftung auf dieser gewährleistet werden kann, sehr viel kürzer als in den Fällen, in denen die Haftvermittlerzusammensetzung während dem Einbrennen oder nach dem Einbrennen, aber während des Abkühlens auf die Umgebungstemperatur, auf den Silikonfilm erfolgt.

Bevorzugte Kleb- oder Dichtstoffe sind solche auf Basis von Epoxidharz, von (Meth)acrylat-Gruppen aufweisenden Monomeren oder Oligomeren, von Alkoxysilan-terminierten Prepolymeren oder von Isocyanat-terminierten Prepolymeren oder Polyisocyanaten.

Als geeignete Kleb- oder Dichtstoffe auf Basis von Epoxidharzen werden einerseits zweikomponentige Kleb- oder Dichtstoffe betrachtet, bei welchen die eine Komponente ein Amin- oder Merkaptanhärter und die zweite Komponente ein Diglycidylether von Bisphenol-A oder Bisphenol-F oder Bisphenol-A/F umfassen. Beispiele für solche 2-komponentigen Epoxidharz-Kleb- oder Dichtstoffe sind solche aus Sikadur® -Produktelinie, wie sie kommerziell erhältlich sind von Sika Schweiz AG.

Als geeignete Kleb- oder Dichtstoffe auf Basis von Epoxidharzen werden weiterhin einkomponentige hitzehärtende Epoxidharz-Kleb- oder -Dichtstoffe betrachtet. Solche Kleb- oder Dichtstoffe enthalten üblicherweise einen Härter, welcher erst bei höher Temperatur frei oder aktiv wird. Beispiele für einen solchen Härter ist Dicyandiamid (dicy). Als besonders bevorzugte einkomponentigen hitzehärtenden Epoxidharz-Kleb- oder -Dichtstoffe sind solche mit erhöhter Schlagzähigkeit, wie sie beispielsweise in EP 1 359 202 A1 offenbart sind. Beispiele für 1-komponentige hitzehärtende Epoxydharz-Klebstoffe sind solche aus SikaPower® -Produktelinie, wie sie kommerziell erhältlich sind von Sika Schweiz AG.

Als geeignete Kleb- oder Dichtstoffe auf Basis von (Meth)acrylatGruppen aufweisenden Monomeren oder Oligomeren sind insbesondere zweikomponentige raumtemperaturhärtende (Meth)acrylat-Kleb- oder -Dichtstoffe zu verstehen, welche in einer ersten Komponente einen Radikalinitiator, insbesondere organische Peroxide, bevorzugt Benzoylperoxid; umfasst und in einer zweiten Komponente (Meth)acrylat-gruppen aufweisende Monomere oder Oligomere enthalten. Beispiele für zweikomponentige raumtemperaturhärtende (Meth)acrylat-Kleb- oder -Dichtstoffe sind solche aus SikaFast® - Produktelinie, wie sie kommerziell erhältlich sind von Sika Schweiz AG.

Als geeignete Kleb- oder Dichtstoffe auf Basis von Alkoxysilan-terminierten Prepolymeren sind einkomponentige feuchtigkeitshärtende Kleb- oder Dichtstoffe die sogenannte MS-Polymere oder Alkoxysilan-terminierte Polyurethanprepolymere, insbesondere solche wie sie hergestellt aus Polyole und Isocyanaten mit anschliessender Reaktion eines Isocyant-reaktiven Organosilanes oder einem Isocyanat-funktionellen Organosilanes hergestellt werden. Diese Kleb- oder Dichtstoffe sind zwar nicht bevorzugt, da gefunden wurde, dass diese Kleb- oder Dichtstoffe vielfach auch auf thermisch gehärteten Silikonbeschichtungen, bei deren Herstellung keine Haftvermittlerzusammensetzung verwendet wurde, eine genügend grosse Haftung vorhanden ist.

Als geeignete Kleb- oder Dichtstoffe auf Basis von Isocyanat-terminierten Prepolymeren sind einerseits zweikomponentige Polyurethankleb- oder Dichtstoffe zu verstehen, deren erste Komponente ein Amin- oder ein Polyol umfassen und deren zweite Komponente eine NCO-haltiges Prepolymer oder ein Polyisocyanat umfassen. Beispiele für solche zweikomponentige raumtemperaturhärtende Polyurethan -Klebstoffe sind solche aus SikaForce ® -Produktelinie, wie sie kommerziell erhältlich sind von Sika Schweiz AG.

Als geeignete Kleb- oder Dichtstoffe auf Basis von Isocyanat-terminierten Prepolymeren sind weiterhin reaktive Polyurethan-Heissschmelzkleb- oder Dichtstoffe zu verstehen, die eine thermoplastisches Polymer sowie ein Isocyanat-terminierten Prepolymeren oder ein thermoplastisches Isocyanat-terminierten Prepolymeren enthalten. Solche reaktiven Polyurethan-Heissschmelzkleb- oder Dichtstoffe werden aufgeschmolzen und verfestigen sich einerseits beim Abkühlen und vernetzen andererseits über eine Reaktion mit Luftfeuchtigkeit.

Als geeignete Kleb- oder Dichtstoffe auf Basis von Isocyanat-terminierten Prepolymeren sind weiterhin einkomponentige feuchtigkeitshärtende Polyurethankleb- oder Dichtstoffe zu verstehen. Solche Kleb- oder Dichtstoffe vernetzen unter dem Einfluss von Feuchtigkeit, insbesondere von Luftfeuchtigkeit. Beispiele für solche einkomponentige feuchtigkeitshärtende Polyurethankleb- oder Dichtstoffe sind solche aus SikaFlex®- und SikaTack®-Produktelinie, wie sie kommerziell erhältlich sind von Sika Schweiz AG.

Die oben erwähnten Isocyanat-terminierten Prepolymeren werden aus Polyolen, insbesondere Polyoxyalkylenpolyolen, und Polyisocyanaten, insbesondere Diisocyanaten, hergestellt.

Bevorzugt sind Kleb- oder Dichtstoffe auf Basis von Isocyanat-terminierten Prepolymeren.

Weitere Kleb- oder Dichtstoffe, welche unter Umständen geeignet sind, sind solche, welche auf thermoplastischen Elastomeren (TPE) basieren.

Beim Verkleben bzw. Abdichten wird der Klebstoff bzw. Dichtstoff mit der thermisch gehärteten Silikonbeschichtung ohne dessen vorgängige Vorbehandlung, wie z.B. Auftrag eines Klebstoffprimers, in Kontakt gebracht. Weiterhin wird beim Verkleben die thermisch gehärtete Silikonbeschichtung mittels eines Klebstoffes mit einem weiteren Fügepartner verklebt.

Es ist zum Beispiel auch möglich, dass der Auftrag eines Klebstoffprimers auf die thermisch gehärtete Silikonbeschichtung aufgetragen werden kann, wenn zum Beispiel der Kunststoff nur teilweise (gewollt oder ungewollt, z.B. durch einen fehlerhaften Auftrag) beschichtet wird, so dass an der Oberfläche sowohl unbeschichteter Kunststoff als auch thermisch gehärtete Silikonbeschichtung vorhanden ist. Beim Auftrag des Kleb- oder Dichtstoffes auf eine derartige Oberfläche ist nach dem Auftrag des Kunststoffprimers eine verlässliche Haftung erreichbar, während dies bei einem traditionellen thermisch gehärteten Silikonbeschichtung nicht der Fall ist, da zum Beispiel bei Polycarbonat, und vor allem beim Polymethylmethacrylat, keine Primer bekannt sind, die sowohl auf dem unbeschichteten Kunststoff, als auch auf dem darauf angebrachten Hardcoat, befähigt sind, eine Haftvermittlung für einen Kleb- oder Dichtstoff zu bewirken.

Das Verkleben kann einerseits dadurch erfolgen, dass der Klebstoff auf die thermisch gehärteten Silikonbeschichtung appliziert wird und anschliessend mit einem weiteren Fügepartner verklebt wird oder der Klebstoff wird zuerst auf einen weiteren Fügepartner appliziert und anschliessend mit auf der thermisch gehärteten Silikonbeschichtung verklebt. Weiterhin ist es möglich, dass der Klebstoff oder der Dichtstoff in eine Spalte, die von thermisch gehärteten Silikonbeschichtung und weiteren Fügepartner gebildet wird, eingepresst wird. Eine weitere Applikationsart ist eine nicht bevorzugte, bei der Klebstoff sowohl auf die thermisch gehärtete Silikonbeschichtung als auch den weiteren Fügepartner appliziert wird und diese anschliessend miteinander verbunden werden.

Nach dem Fügen der Fügepartner erhärtet der Kleb- oder Dichtstoff und verbindet damit die Fügepartner dauerhaft. Ein derart gebildeter Verbundkörper weist bei verschiedensten Klima-Bedingungen eine dauerhafte Haftung auf und kann hohe mechanische Belastungen übertragen.

Erfindungsgemäss braucht die thermisch gehärteten Silikonbeschichtung mit einem Klebstoffprimer nicht vorbehandelt zu sein, es kann aber durchaus von Vorteil sein, dass sie vor dem Verkleben bzw. Abdichten gereinigt wird. Eine solche Reinigung umfasst insbesondere ein Abwischen, vorzugsweise mit einem leicht flüchtigen Lösungsmittel. Das Lösungsmittel sollte vorzugsweise inert gegenüber der Beschichtung sein. Weiterhin ist hierbei darauf zu achten, dass das Lösungsmittel möglichst vollständig entfernt ist, bevor der Klebstoff bzw. der Klebstoff auf die gereinigte Oberfläche appliziert wird oder damit in Kontakt tritt.

Der weitere Fügepartner kann aus diversen Materialien sein. Bevorzugt sind einerseits Kunststoffe, anderseits Metalle und schliesslich Glas und Glaskeramiken. Als Kunststoffe sind die in der Klebetechnologie üblichen Kunststoffe als relevant zu betrachten. In einem besonders bevorzugten Fall ist der weitere Fügepartner ebenfalls ein thermisch gehärteten Silikonbeschichtung, beziehungsweise ein mit einer thermisch gehärteten Silikonbeschichtung überzogener Kunststoff. Somit ist es auch möglich, dass der weitere Fügepartner identisch mit der erfindungsgemässen thermisch gehärteten Silikonbeschichtung, beziehungsweise der damit überzogene Kunststoff ist.

Als Metalle sind insbesondere die Metalle und Legierungen von Eisen, Aluminium, Kupfer, Chrom bevorzugt. Als besonders bevorzugt sind Stähle und Aluminium sowie dessen Legierungen. Besonders bevorzugt sind die Metalle lackiert. Als Lack werden insbesondere Automobillacke bevorzugt.

Glas und Glaskeramiken sind ebenfalls bevorzugte Substrate. Insbesondere ist Glas, welches als Floatglas bezeichnet wird, sowie die daraus hergestellten Artikel, insbesondere Scheiben, bevorzugt. Als Glaskeramiken sind insbesondere solche bevorzugt, welche mittels Siebdruck aufgetragen und anschliessend eingebrannt werden.

Der weitere Fügepartner kann mit einem Primer oder einer Haftvermittlerzusammensetzung vor dem Verkleben oder Abdichten vorbehandelt sein oder nicht. Dies hängt stark vom Material des Fügepartners, beziehungsweise von den klimatischen Bedingungen, ab, wo ein solcher Verbund eingesetzt werden soll.

In einer weiteren Ausführungsform werden die thermisch gehärteten Silikonbeschichtungen mit einem reaktiven Material ummantelt. Insbesondere handelt es sich hierbei um Scheiben, welche mit einem reaktiven Material, wie beispielsweise einem ein- oder zweikomponentigen Polyurethane, mittels RIM (Reaction Injection Molding) Verfahren oder durch Aufbringen eines Thermoplasten, wie beispielsweise von PVC oder eines thermoplastischen Polyurethans (TPU), sowie deren elastischen thermoplastsichen Ausführungsformen, ummantelt werden.

Bevorzugt stellt ein derart gebildeter Verbundkörper ein Fahrzeug, insbesondere ein Automobil, oder ein Teil davon dar. Es ist im Automobilbau häufig, dass verklebte bzw. abgedichtet Module zum Einsatz kommen oder Komponenten an der Fertigungslinie verklebt werden.

Als besonders bevorzugt ist das Verkleben von Scheiben aus einem transparenten Kunststoff, insbesondere aus Polycarbonat, die mit einer erfindungsgemässen Beschichtung überzogen sind, mit der Karosserie eines Fahrzeugs, insbesondere eines Automobils, wobei die Verklebung üblicherweise an einem Flansch oder Rahmen erfolgt. Die Karosserie, beziehungsweise der Flansch oder Rahmen, ist typischerweise aus einem lackierten Metall gefertigt. Besonders bevorzugte Ausführungsformen sind Dachmodule und Seitenscheibenfenster und Abdeckelemente, wie z.B. Säulenabdeckungen.

Eine weitere bevorzugte Ausführungsform der Erfindung ist ein Scheinwerferstreuscheibe aus mit einer erfindungsgemässen thermisch gehärteten Silikonbeschichtung überzogenen Polycarbonat, beziehungsweise ein Scheinwerfer, der aus einer Verklebung einer solchen Scheinwerferstreuscheibe und einem Scheinwerfergehäuse resultiert.

Weitere Möglichkeiten für erfindungsgemässe Ausführungsformen ergeben sich aus den Anwendungsgebieten von Kunststoffen, die mit einer erfindungsgemässen thermisch gehärteten Silikonbeschichtung überzogenen sind, und insbesondere bei denen, wo solche Materialien verklebt oder abgedichtet werden oder werden sollen.

So finden die Kunststoffe, die mit einer erfindungsgemässen thermisch gehärteten Silikonbeschichtung überzogenen sind, Einsatz in der Herstellung beispielsweise als Lampengehäuse, Sicherheitsbrillen, Birnenabdeckungen, Displayabdeckungen, Sicherheitsgläser und Sicherheitsscheiben, Überdachungen, Datenträger wie CD oder DVD oder ähnliches etc, insbesondere dort, wo in der Herstellung dieser Gegenstände Kleb- oder Dichtstoff eingesetzt wird, oder dort wo diese Gegenstände mit anderen Fügepartnem verklebt oder abgedichtet werden.

Eine neuere Anwendung von thermoplastischen Kunststoffen, nämlich für OLEDs-Folien (Organic Light Emitting Diods) ist ebenfalls Gegenstand der Erfindung. Hierbei sind im thermoplastischen Kunststoff organische Moleküle eingelagert, die durch Anlegen von Strom gezielt zum Leuchten angeregt werden können und damit zum Darstellen von Informationen benutzt werden können. Die Wirkungsweise und Herstellung solcher OLEDs ist bekannt, z.B. aus Matthias Rehan, "Elektrisch leitfähige Kunststoffe", Chemie in Unserer Zeit 2003, S.17-30*,* oder aus US 6,703,184 oder US 5,247,190. Solche OLEDs können als Folien für OLED-Displays genutzt werden. OLEDs-Displays werden bereits von Cambridge Technology und Kodak kommerzialisiert. Für den Schutz dieser OLEDs-Folien können nun die thermoplastischen Kunststoffe mit einer thermisch gehärteten Silikonbeschichtung mit dem erfindungsgemässen Verfahren beschichtet werden. Insbesondere sind solche Folien als dünne Display-Einheiten für Computer geeignet und können auch als Informationsträger für Werbezwecke verwendet werden. Als wichtige Eigenschaft dieser Folien ist ihre kleine Dicke und die daraus resultierende Flexibilität, die eine Darstellung von Informationen erlaubt, wie sie mit traditioneller Informationstechnologie nicht erreicht werden kann. So kann eine solche Folie gerollt werden oder den Konturen eines Körpers vollständig angepasst werden, so dass komplexe Geometrien erreicht werden können.

All diesen Anwendungen ist es gemein, dass eine Verklebung des mit einer thermisch gehärteten Silikonbeschichtung überzogenen Folien aus Polycarbonat besonders erwünscht ist. Deshalb stellt eine erfindungsgemässe thermische gehärtete Silikonbeschichtung, die ohne ein Behandeln mittels Klebstoffprimer möglich ist, einen technologischen und ökonomischen Vorteil dar.

### Beispiele

### Herstellung der Haftvermittlerzusammensetzung

Es wurden eine Mischung aus 0.3 Gew.-% N-(2-Aminoethyl)-3-aminopropyl-trimethoxysilan, 0.3 Gew.-% Isopropyltri(dodecyl)benzolsulfonyltitanat (Kenreact KR9S), 1 Gew.-% Ethanol und 98.46 Gew.-% Heptan hergestellt. Diese Haftvermittlerzusammensetzung wurde in den folgenden Versuchen eingesetzt.

### Herstellung der thermisch gehärteten Silikonbeschichtungen

Alle Beschichtungsversuche erfolgten bei 23°C und 50% relativer Luftfeuchtigkeit. Es wurden Makrolon® AL2647 Polycarbonat-Platten von Bayer als Substrat verwendet. Die Platten der Dimensionen 10cm x 15 cm x 3 mm wurden vor der Verwendung mittels Abwischen mit einem mit Isopropanol getränkten fuselfreien Tuch gereinigt und anschliessend 3 Minuten lang abgelüftet.
Als Silikonzusammensetzungen wurden PHC 587, AS4000 und AS4700, kommerziell erhältlich von GE Silicones, verwendet. Bei der Verwendung von AS4700 wurden die Polycarbonatplatten zuerst mit dem dafür empfohlenen Kunststoffprimer SHP470 Basecoat von GE Silicones fliessbeschichtet, das heisst der Kunststoffprimer wurde mittels Spritzflasche homogen auf die vertikal gestellte Platte gespritzt und in dieser Position 20 Minuten an der Luft trocknen gelassen. Anschliessend wurde die beschichtete Platte während 25 Minuten bei 125°C in einem Umluftofen wärmebehandelt. Bei der Verwendung von AS 4000 wurde in analoger Weise der Primer SHP401 verwendet, wurde nach einer Ablüftezeit von 20 Minuten jedoch nicht wärmebehandelt.

Es wurden PHC 587, AS4000 auf die gereinigten vertikal gestellten Polycarbonatplatten, respektive AS4700 auf die geprimerten vertikal gestellten Polycarbonatplatten mittels Spritzflasche homogen auf die vertikal gestellte Platte gespritzt, während der einer Ablüftezeit von 20 Minuten in vertikaler Position trocknen gelassen. Während dem Ablüften wurde parallel zur Oberfläche ein Luftstrom (23°C, 50% rel. Luftfeuchte) mit einer Geschwindigkeit von 1.5 m/sec geblasen.
Auf die Proben der Beispielen *Ref.1* bis *Ref.3* wurden direkt danach die Haftvermittlerzusammensetzung mittels Pinsel in einer Menge von 30 g/m² appliziert, und weiteren 55 - 60 Minuten im bei 125°C bzw. 130°C temperierten Umluftofen fertig eingebrannt.
Die Proben mit den Beispielen *1* bis *5* wurden nach dem Ablüften während 5 - 10 Minuten in einem bei 125°C bzw. 130°C temperierten Umluftofen eingebracht. Anschliessend wurde nun die Haftvermittlerzusammensetzung mittels Pinsel in einer Menge von 30 g/m² appliziert, und während weiteren 50 Minuten im bei 125°C bzw. 130°C temperierten Umluftofen fertig eingebrannt. Beim Referenzbeispiel *Ref.4* wurde überhaupt keine Haftvermittlerzusammensetzung verwendet. Beim Referenzbeispiel *Ref.5* wurde das Einbrennen ohne Aufbringen eines Haftvermittlerzusammensetzung während dem Einbrennen hergestellt, die Haftvermittlerzusammensetzung in der oben angebenen Menge wurde erst nach dem Abkühlen auf Raumtemperatur und einer Lagerzeit von einem Tag bei 23°C/50% rel. Luftfeuchtigkeit, aufgebracht und vor dem Applizieren des Klebstoffs 10 Minuten abgelüftet

Nach einer in Tabelle 1 und 2 spezifizierten Lagerzeit ('t_{L}') dieser Probekörper bei 25 °C / 50% rel. Luftfeuchtigkeit wurden jeweils Rundraupen der einkomponentigen, feuchtigkeitshärtenden Polyurethanklebstoffen Sikaflex®-221 (,SF221'), SikaTack®-Plus (,STP'), Sikaflex®-250 DM-3 (,DM3') und Sikaflex®-265 ('SF265'), beziehungsweise des zweikomponentigen Polyurethanklebstoffes SikaForce®-7550-L15 ('7550'),(alle kommerziell erhältlich bei Sika Schweiz AG) mittels Auspresskartusche und Düse aufgetragen.

Der Klebstoff wurde nach einer Aushärtezeit von 7 Tagen Klimaraumlagerung ('KL') (23°C, 50% rel. Luftfeuchtigkeit), sowie nach einer anschliessenden Wasserlagerung (,WL') in Wasser bei 23°C während 7 Tagen, sowie nach einer anschliessend Kataplasma-Lagerung (,CP') von 7 Tagen bei 70°C, 100 % rel. Luftfeuchtigkeit, getestet.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen der kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = 0% Kohäsionsbruch (rein adhäsiver Bruch)

Durch den Zusatz ,B' wird angezeigt, dass sich die thermisch gehärtete Silikonbeschichtung vom Polycarbonat ablöst und deshalb die Silikonbeschichtung eine Schwachstelle darstellt. Testresultate mit Kohäsionsbrüchen von weniger als 75% gelten typischerweise als ungenügend.

**Tabelle 1. Haftung von SikaTack®-Plus auf mit thermisch gehärteten Silikonbeschichtungen überzogenen Polycarbonat (PHC587, AS4000 und AS4700 als Silikonzusammensetzung) nach unterschiedlichen Lagerzeiten.**

| | *Ref.1* | | | *Ref.2* | | | *Ref.3* | | | *Ref.4* | | | *Ref.5* | | |
|---|---|---|---|---|---|---|---|---|---|---|---|---|---|---|---|
| | PHC | | | AS4000 | | | AS4700 | | | AS4000 | | | AS4000 | | |
| t_{L} | KL | WL | CP | KL | WL | CP | KL | WL | CP | KL | WL | CP | KL | WL | CP |
| 1d | 1 | 1 | 1 | 1 | 1 | 1 | 1 | 1 | 1 | 5 | 5 | 5 | 1 | 1 | 1 |
| 14d | 2 | 1 | 1 | 2 | 1 | 1 | 3 | 2 | 1 | 5 | 5 | 5 | 4 | 5 | 5 |
| 70d | 3 | 2 | 5 | 3 | 4 | 4 | 3 | 5 | 4 | 5 | 5 | 5 | 5 | 5 | 5 |

**Tabelle 2. Haftung von unterschiedlichen Klebstoffen auf mit thermisch gehärteten Silikonbeschichtungen überzogenen Polycarbonat (AS4000 als Silikonzusammensetzung) nach unterschiedlichen Lagerzeiten t_{L}.**

| | *1* | | | *2* | | | *3* | | | *4* | | | *5* | | |
|---|---|---|---|---|---|---|---|---|---|---|---|---|---|---|---|
| | SF221 | | | SF265 | | | DM-3 | | | STP | | | 7550 | | |
| t_{L} | KL | WL | CP | KL | WL | CP | KL | WL | CP | KL | WL | CP | KL | WL | CP |
| 1 d | 1 | 1 | 1 | 1 | 1 | 1 | 1 | 1 | 1 | 3B | 2B | 2B | 3B | 2 | 3B |
| 14d | 1 | 1 | 1 | 1 | 1 | 2B | 1 | 1 | 2B | 3B | 3B | 2 | 4B | 2 | 2 |
| 45d | 1 | 1 | 1 | 1 | 2 | 2 | 1 | 1 | 1 | 1 | 1 | 1 | n.b.* | n.b.* | n.b.* |
| 75d | 1 | 1 | 1 | 1 | 1 | 1 | 1 | 1 | 2 | 1 | 1 | 1 | n.b.* | n.b.* | n.b.* |
| 100d | 1 | 1 | 1 | 1 | 1 | 1 | 1 | 1 | 1 | 1 | 1 | 1 | n.b.* | n.b.* | n.b.* |

| | | | | | | | | | | | | | | | |
|---|---|---|---|---|---|---|---|---|---|---|---|---|---|---|---|
| * n.b.= nicht bestimmt. | | | | | | | | | | | | | | | |

Die Resultate zeigen deutlich, dass die erfindungsgemäss thermisch gehärteten Silikonbeschichtungen im Vergleich zu den Referenzbeispielen eine deutlich verbesserte Haftung aufweisen und insbesondere eine verlängerte Lagerzeit, während der eine gute Haftung erhalten bleibt gewährleistet wird.

### Variation der Einbrandbedingungen

In einer weiteren Versuchsreihe wurden die Einbrandbedingungen variiert. Hierzu wurde eine Haftvermittlerzusammensetzung aus 0.3 Gew.-% Bis-[3-(trimethoxysilyl)-propyl]-amin, 0.3 Gew.-% Tetrabutyl-orthotitanat (Fluka AG) und 99.4 Gew.-% Heptan hergestellt. Diese Haftvermittlerzusammensetzung wurde wie folgt eingesetzt.
Es wurden Silikonfilm aufweisende Polycarbonatplatten wie folgt hergestellt: Makrolon® AL2647 Polycarbonat-Platten von Bayer der Dimensionen 10cm x 15 cm x 3 mm wurden vor der Verwendung mittels Abwischen mit einem mit Isopropanol getränkten fuselfreien Tuch gereinigt und anschliessend 3 Minuten lang abgelüftet. Die Platten wurden mit dem Kunststoffprimer SHP401 bei 23°C und 50% relativer Luftfeuchtigkeit fliessbeschichtet, das heisst der Kunststoffprimer wurde mittels Spritzflasche homogen auf die vertikal gestellte Platte gespritzt und in dieser Position 20 Minuten an der Luft trocknen gelassen. Anschliessend wurde die Silikonzusammensetzung AS4000, kommerziell erhältlich von GE Silicones, mittels Spritzflasche homogen auf die geprimerten, vertikal gestellten Polycarbonatplatten gespritzt und während einer Ablüftezeit von 20 Minuten in vertikaler Position trocknen gelassen. Während dem Ablüften wurde parallel zur Oberfläche ein Luftstrom (23°C, 50% rel. Luftfeuchte) mit einer Geschwindigkeit von 1.5 m/sec geblasen.

Anschliessend wurden diese Silikonfilm aufweisenden Polycarbonatplatten während einer in Tabelle 3 als "t₁" bezeichneten Zeit in einem bei 130°C temperierten Umluftofen eingebracht. Anschliessend wurde die Probe während 2 Minuten auf einen Tisch bei Raumtemperatur gelegt. Anschliessend wurden die Proben mittels eines mit der Haftvermittlerzusammensetzung getränkten Melaminschwammes abgewischt. Unmittelbar danach wurden die Proben wieder in den Umluftofen gelegt und während einer in Tabelle 3 als "t₂" bezeichneten Zeit bei 130°C eingebrannt.
Beim Vergleichsbeispiel *Ref.6* wurde direkt nach dem Ablüften der Silikonzusammensetzung die Haftvermittlerzusammensetzung aufgebracht, das heisst die Haftvermittlerzusammensetzung wurde vor dem Einbrennen aufgetragen (t₁=0). Beim Referenzbeispiel *Ref.7* wurde überhaupt keine Haftvermittlerzusammensetzung verwendet (Einbranddauer: 60 Minuten bei 130°C).

Nach einer in Tabelle 3 spezifizierten Lagerzeit ('t_{L}') dieser Probekörper bei 25 °C / 50% rel. Luftfeuchtigkeit wurden Rundraupen des einkomponentigen, feuchtigkeitshärtenden Polyurethanklebstoffs SikaTack®-Plus (,STP') (kommerziell erhältlich bei Sika Schweiz AG) mittels Auspresskartusche und Düse aufgetragen.
Der Klebstoff wurde nach einer Aushärtezeit von 7 Tagen Klimaraumlagerung ('KL') (23°C, 50% rel. Luftfeuchtigkeit), sowie nach einer anschliessenden Wasserlagerung ('WL') in Wasser bei 23°C während 7 Tagen, sowie nach einer anschliessend Kataplasma-Lagerung (,CP') von 7 Tagen bei 70°C, 100 % rel. Luftfeuchtigkeit, mittels des beschriebenen 'Raupentest' getestet.

**Tabelle 3. Haftung von SikaTack®-Plus auf mit thermisch gehärteten Silikonbeschichtungen überzogenen Polycarbonat (AS4000 als Silikonzusammensetzung) nach unterschiedlichen Lagerzeiten und Einbrennparametern.**

| | | | t_{L=}1d | | | t_{L=}14d | | | t_{L=}28d | | | t_{L=}56d | | | t_{L=}84d | | |
|---|---|---|---|---|---|---|---|---|---|---|---|---|---|---|---|---|---|
| | t₁^{a)} | t₂ ^{a)} | KL | WL | CP | KL | WL | CP | KL | WL | CP | KL | WL | CP | KL | WL | CP |
| *Ref.6* | 5 | 60 | 3 | 3 | 5 | 5 | 5 | 5 | 5 | 5 | 5 | 5 | 5 | 5 | 5 | 5 | 5 |
| *Ref.7* | - | - | 5 | 5 | 5 | 5 | 5 | 5 | 5 | 5 | 5 | 5 | 5 | 5 | 5 | 5 | 5 |
| *6* | 5 | 55 | 1 | 1 | 1 | 1 | 1 | 1 | 3 | 1 | 3 | 1 | 3 | 2 | 4 | 4 | 4 |
| *7* | 10 | 50 | 1 | 1 | 1 | 1 | 1 | 1 | 3 | 1 | 2 | 4 | 4 | 3 | 3 | 4 | 4 |
| *8* | 15 | 45 | 1 | 1 | 1 | 1 | 1 | 1 | 2 | 2 | 3 | 3 | 4 | 3 | 3 | 4 | 4 |
| *9* | 20 | 40 | 1 | 1 | 1 | 1 | 1 | 1 | 3 | 2 | 2 | 5 | 4 | 3 | 3 | 4 | 3 |
| *10* | 30 | 30 | 1 | 1 | 1 | 1 | 1 | 1 | 1 | 1 | 1 | 1 | 1 | 2 | 4 | 4 | 4 |
| *11* | 45 | 15 | 1 | 1 | 1 | 2 | 3 | 3 | 5 | 4 | 4 | 5 | 5 | 4 | 4 | 4 | 4 |
| *12* | 60 | 0 | 1 | 1 | 1 | 1 | 2 | 2 | 1 | 1 | 5 | 2 | 3 | 3 | 3 | 3 | 3 |

| | | | | | | | | | | | | | | | | | |
|---|---|---|---|---|---|---|---|---|---|---|---|---|---|---|---|---|---|
| ^{a)} Werte in Minuten. | | | | | | | | | | | | | | | | | |

### Verklebungen von Silikonbeschichtungen

Auf der für Tabelle 2 und Tabelle 3 verwendeten Silikonbeschichtungen wurden ohne vorgängigen Klebstoffprimer eine Raupe Sikaflex®-221 appliziert. Anschliessend wurde eine ebenfalls ungeprimerte, beziehungsweise geprimerte, Platte des jeweiligen in Tabelle 4 angegebenen Materials des Fügepartners auf die Klebstoffraupe gepresst, so dass eine Klebstoffschichtdicke von 3 mm resultierte. Dieser Verbund wurde während 7 Tagen bei 23°C, 50% rel. Luftfeuchtigkeit gelagert. Keiner der Verbundkörper konnte mittels durch einen Hammers eingetriebenen Keils adhäsiv getrennt werden.

**Tabelle 4. Verklebungen von Hard-Coat-Polycarbonaten und diversen Fügepartnem mittels Sikaflex®-221.**

| Beschichtung | Fügepartner | | | | |
|---|---|---|---|---|---|
| *4* | Float-Glas*^{^ç} | Stahlblech mit Autolack^{×} | AIMgSi1*^{†} | Edelstahl 1.4301*^{†} | *4*^{‡} |
| *6* | Float-Glas*^{^ç} | Stahlblech mit Autolack^{×} | AIMgSi1*^{†} | Edelstahl 1.4301*^{†} | *6*^{‡} |
| *7* | Float-Glas*^{^ç} | Stahlblech mit Autolack^{×} | AIMgSi1*^{†} | Edelstahl 1.4301*^{†} | *7*^{‡} |
| *8* | Float-Glas*^{^ç} | Stahlblech mit Autolack^{×} | AIMgSi1*^{†} | Edelstahl 1.4301*^{†} | *8*^{‡} |
| *9* | Float-Glas*^{^ç} | Stahlblech mit Autolack^{×} | AIMgSi1*^{†} | Edelstahl 1.4301*^{†} | *9*^{‡} |
| *10* | Float-Glas*^{^ç} | Stahlblech mit Autolack^{×} | AIMgSi1*^{†} | Edelstahl 1.4301*^{†} | *10*^{‡} |
| *11* | Float-Glas*^{^ç} | Stahlblech mit Autolack^{×} | AIMgSi1*^{†} | Edelstahl 1.4301*^{†} | *11*^{‡} |
| *12* | Float-Glas*^{^ç} | Stahlblech mit Autolack^{×} | AIMgSi1*^{†} | Edelstahl 1.4301*^{†} | *12*^{‡} |

| | | | | | |
|---|---|---|---|---|---|
| * Bezogen von Firma Rocholl, Deutschland ^{^} Vorbehandlung: Sika® Aktivator (erhältlich von Sika Schweiz AG) ^{ç} 6 mm Dicke ^{×} Vorbehandlung: Sika® Primer-206 G+P (erhältlich von Sika Schweiz AG) ^{†} Vorbehandlung: angeschliffen und mit Isopropanol getränktem Tuch sauber gewischt und mit Sika® Primer-204 N (erhältlich von Sika Schweiz AG). ^{‡} ungeprimert | | | | | |

## Patentansprüche

1. Verfahren zur Herstellung einer thermisch gehärteten Silikonbeschichtung auf einem Kunststoff, **dadurch gekennzeichnet, dass** es die folgenden Schritte umfasst
- Aufbringen einer Silikonzusammensetzung auf die Oberfläche eines Kunststoffes oder auf die Oberfläche eines mit einem Kunststoffprimer behandelten Kunststoffes
- Ablüften der Silikonzusammensetzung unter Bildung eines Silikonfilms
- Einbrennen bei einer Temperatur zwischen 80°C und 200°C
- Auftragen einer Haftvermittlerzusammensetzung auf den Silikonfilm während dem Einbrennen oder während der Abkühlphase auf Umgebungstemperatur nach dem Einbrennen.

2. Verfahren gemäss Anspruch 1, **dadurch gekennzeichnet, dass** die Silikonzusammensetzung eine wässrige Dispersion einer kolloidalen Kieselsäure in einem Gemisch von Wasser und einem organischen Lösungsmittel und mindestens einem Trialkoxysilan RSi(OR')₃ oder dessen Silanol RSi(OR')₃₋ₙ(OH)ₙ oder Teilkondensate davon umfasst und wobei
R einen Alkyl-Substituenten mit 1-3 Kohlenstoffatomen oder einen Arylsubstituenten mit 6 bis 13 Kohlenstoffatomen darstellt;
R' einen Alkylsubstituenten mit 1-3 Kohlenstoffatomen darstellt und
n = 1, 2 oder 3 ist.

3. Verfahren gemäss einem der vorhergehenden Ansprüche, **dadurch gekennzeichnet, dass** die Haftvermittlerzusammensetzung mindestens eine Organo-Siliziumverbindung, welche mindestens eine an ein Siliziumatom gebundene Alkoxygruppe sowie mindestens einen über eine Kohlenstoff-Silizium-Bindung an ein Siliziumatom gebundenen organischen Substituenten aufweist, umfasst.

4. Verfahren gemäss Anspruch 1 oder 2, **dadurch gekennzeichnet, dass** die Haftvermittlerzusammensetzung mindestens eine Organo-Titanverbindung, welche mindestens einen über eine Sauerstoff-Titan-Bindung an das Titanatom gebundenen Substituenten aufweist, umfasst.

5. Verfahren gemäss Anspruch 1 oder 2, **dadurch gekennzeichnet, dass** die Haftvermittlerzusammensetzung
mindestens eine Organo-Siliziumverbindung, welche mindestens eine an ein Siliziumatom gebundene Alkoxygruppe sowie mindestens einen über eine Kohlenstoff-Silizium-Bindung an ein Siliziumatom gebundenen organischen Substituenten aufweist,
sowie
mindestens eine Organo-Titanverbindung, welche mindestens einen über eine Sauerstoff-Titan-Bindung an das Titanatom gebundenen Substituenten aufweist, umfasst.

6. Verfahren gemäss Anspruch 3 oder 5, **dadurch gekennzeichnet, dass** die Organo-Siliziumverbindung die Formel (I) oder (II) oder (III) aufweist 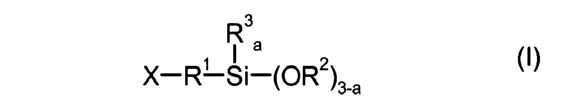 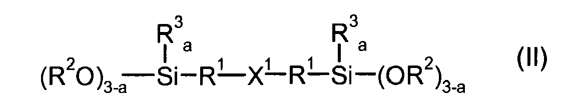 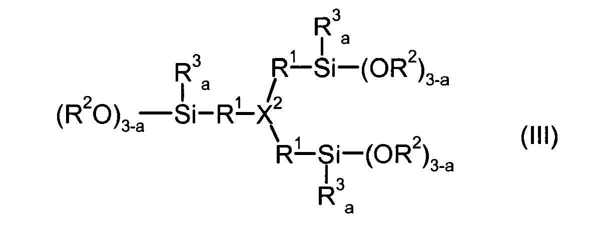 wobei
R¹ eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen darstellt; und
R² für eine Alkylgruppe mit 1 bis 5 C-Atomen, insbesondere für Methyl oder Ethyl, oder für eine Acylgruppe steht; und
R³ für eine Alkylgruppe mit 1 bis 8 C-Atomen, insbesondere Methyl, steht; und
X für ein H, oder eine funktionelle Gruppe, welche ausgewählt ist aus der Gruppe umfassend Oxiran, OH, (Meth)acryloxy, Amin, SH, Acylthio und Vinyl, bevorzugt Amin, steht; und
X¹ für eine funktionelle Gruppe, welche ausgewählt ist aus der Gruppe umfassend NH, S, S₂ und S₄ steht; und
X² für eine funktionelle Gruppe, welche ausgewählt ist aus der Gruppe umfassend N und Isocyanurat steht; und
a für einen der Werte 0, 1 oder 2, bevorzugt 0, steht.

7. Verfahren nach einem der Ansprüche 3 bis 6 , **dadurch gekennzeichnet, dass** die Haftvermittlerzusammensetzung mindestens ein Lösungsmittel mit einem Siedepunkt bei 760 Torr von zwischen 25°C und 140°C, insbesondere von zwischen 50°C und 120°C, bevorzugt von zwischen 65 und 99°C, umfasst.

8. Verfahren gemäss einem der vorhergehenden Ansprüche, **dadurch gekennzeichnet, dass** der Kunststoff ein Polycarbonat, insbesondere ein aromatisches Polycarbonat, ist.

9. Verfahren gemäss einem der vorhergehenden Ansprüche, **dadurch gekennzeichnet, dass** das Ablüften der Silikonzusammensetzung zwischen 5 Minuten und 60 Minuten, insbesondere zwischen 5 und 30 Minuten, bevorzugt zwischen 5 bis 25 Minuten, dauert.

10. Verfahren gemäss einem der vorhergehenden Ansprüche, **dadurch gekennzeichnet, dass** das Einbrennen bei einer Temperatur zwischen 100 und 140°C, insbesondere während einer Einbrennzeit von 30 bis 90 Minuten, erfolgt.

11. Verfahren gemäss einem der vorhergehenden Ansprüche, **dadurch gekennzeichnet, dass** das Auftragen der Haftvermittlerzusammensetzung auf den Silikonfilm während dem Einbrennen, insbesondere während der ersten Hälfte, insbesondere während dem ersten Drittel, der Einbrenndauer, bevorzugt im Zeitfenster zwischen 1. Minute und der 30. Minuten der Einbrenndauer, erfolgt.

12. Thermisch gehärtete Silikonbeschichtung, **dadurch gekennzeichnet, dass** sie nach einem Verfahren gemäss einem der Ansprüche 1 bis 11 hergestellt wird.

13. Verfahren zum Verkleben oder Abdichten von thermisch gehärteten Silikonbeschichtungen gemäss Anspruch 12, **dadurch gekennzeichnet, dass** ein Klebstoff oder ein Dichtstoff mit der thermisch gehärteten Silikonbeschichtung in Kontakt gebracht wird ohne dass vorgängig auf der thermisch gehärteten Silikonbeschichtung ein Klebstoffprimer aufgebracht worden ist.

14. Verbundkörper, welcher durch ein Verfahren zum Verkleben oder Abdichten gemäss Anspruch 13 hergestellt wird und wobei der Klebstoff oder Dichtstoff ausgehärtet ist.

15. Verwendung einer Haftvermittlerzusammensetzung, wie sie in den Ansprüchen 3 bis 7 beschrieben ist und unter Anwendung eines Verfahrens gemäss Ansprüchen 1-11 oder 13, zur Verbesserung der Haftung von Klebstoffen oder Dichtstoffen von Silikonbeschichtungen.

## Claims

1. A method of producing a thermally cured silicone coating on a plastic, **characterized in that** it comprises the following steps:
- applying a silicone composition to the surface of a plastic or to the surface of a plastic treated with a plastics primer
- flashing off the silicone composition to form a silicone film
- baking at a temperature between 80°C and 200°C
- applying an adhesion promoter composition to the silicone film during baking or during the cooling phase to ambient temperature after baking.

2. The method of claim 1, **characterized in that** the silicone composition comprises an aqueous dispersion of a colloidal silica in a mixture of water and an organic solvent and at least one trialkoxysilane RSi(OR')₃ or its silanol RSi(OR')₃₋ₙ(OH)ₙ or partial condensates thereof, where
R represents an alkyl substituent having 1-3 carbon atoms or an aryl substituent having 6 to 13 carbon atoms;
R' represents an alkyl substituent having 1-3 carbon atoms; and
n is 1, 2 or 3.

3. The method of any one of the preceding claims, **characterized in that** the adhesion promoter composition comprises at least one organosilicon compound which has at least one alkoxy group attached to a silicon atom and also at least one organic substituent attached via a carbon-silicon bond to a silicon atom.

4. The method of claims 1 or 2, **characterized in that** the adhesion promoter composition comprises at least one organotitanium compound which has at least one substituent attached via an oxygen-titanium bond to the titanium atom.

5. The method of claims 1 or 2, **characterized in that** the adhesion promoter composition comprises
at least one organosilicon compound which has at least one alkoxy group attached to a silicon atom and also at least one organic substituent attached via a carbon-silicon bond to a silicon atom,
and
at least one organotitanium compound which has at least one substituent attached via an oxygen-titanium bond to the titanium atom.

6. The method of claim 3 or 5, **characterized in that** the organosilicon compound has the formula (I) or (II) or (III) 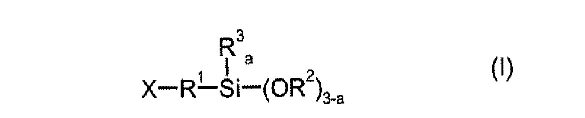 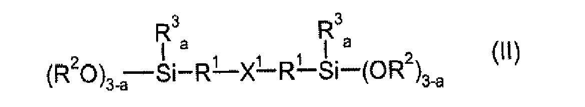 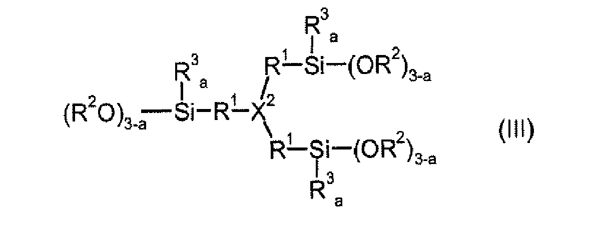 where
R¹ is a linear or branched, optionally cyclic, alkylene group having 1 to 20 C atoms, optionally with aromatic fractions, and optionally with one or more heteroatoms, more particularly nitrogen atoms; and
R² is an alkyl group having 1 to 5 C atoms, more particularly methyl or ethyl, or is an acyl group; and
R³ is an alkyl group having 1 to 8 C atoms, more particularly methyl; and
X is an H, or a functional group selected from the group encompassing oxirane, OH, (meth)acryloyloxy, amine, SH, acylthio, and vinyl, preferably amine; and
X¹ is a functional group selected from the group encompassing NH, S, S₂, and S₄; and
X² is a functional group selected from the group encompassing N and isocyanurate; and
a is one of 0, 1 or 2, preferably 0.

7. The method of any one of claims 3 to 6, **characterized in that** the adhesion promoter composition comprises at least one solvent having a boiling point at 760 torr of between 25°C and 140°C, more particularly of between 50°C and 120°C, preferably of between 65 and 99°C.

8. The method of any one of the preceding claims, **characterized in that** the plastic is a polycarbonate, more particularly an aromatic polycarbonate.

9. The method of any one of one of the preceding claims, **characterized in that** the flashing-off of the silicone composition lasts between 5 minutes and 60 minutes, more particularly between 5 and 30 minutes, preferably between 5 to 25 minutes.

10. The method of any one of one of the preceding claims, **characterized in that** the baking takes place at a temperature between 100 and 140°C, more particularly over a baking time of 30 to 90 minutes.

11. The method of any one of the preceding claims, **characterized in that** the applying of the adhesion promoter composition to the silicone film takes place during baking, more particularly during the first half, more particularly during the first third, of the baking time, preferably in the time window between the 1st minute and the 30th minute of the baking time.

12. A thermally cured silicone coating **characterized in that** it is produced by a method of any one of claims 1 to 11.

13. A method of adhesively bonding or sealing thermally cured silicone coatings of claim 12, **characterized in that** an adhesive or a sealant is contacted with the thermally cured silicone coating without an adhesive primer having been applied beforehand to the thermally cured silicone coating.

14. An assembly produced by a method of adhesive bonding or sealing of claim 13 and where the adhesive or sealant is cured.

15. The use of an adhesion promoter composition as described in claims 3 to 7 and by using a method according to any one of claims 1 to 11 or 13 for promoting the adhesion of adhesives or sealants of silicone coatings.

## Revendications

1. Procédé pour la réalisation d'un revêtement en silicone durci par voie thermique sur un matériau synthétique, **caractérisé en ce qu'**il comprend les étapes suivantes
- application d'une composition de silicone sur la surface d'un matériau synthétique ou sur la surface d'un matériau synthétique traité avec un apprêt synthétique
- évacuation de l'air de la composition de silicone avec formation d'une pellicule de silicone
- cuisson à une température entre 80°C et 200°C
- application d'une composition de promoteur d'adhérence sur la pellicule de silicone pendant la cuisson ou pendant la phase de refroidissement à la température ambiante après la cuisson.

2. Procédé selon la revendication 1, **caractérisé en ce que** la composition de silicone comprend une dispersion aqueuse d'une silice colloïdale dans un mélange d'eau et d'un solvant organique et d'au moins un trialcoxysilane RSi(OR')₃ ou son silanol RSi(OR')₃₋ₙ(OH)ₙ ou des produits de condensation partiels de ceux-ci et où
R représente un substituant alkyle comprenant 1-3 atomes de carbone ou un substituant aryle comprenant 6 à 13 atomes de carbone ;
R' représente un substituant alkyle comprenant 1-3 atomes de carbone et
n = 1, 2 ou 3.

3. Procédé selon l'une quelconque des revendications précédentes, **caractérisé en ce que** la composition de promoteur d'adhérence comprend au moins un composé organosilicié, qui présente au moins un groupe alcoxy lié à un atome de silicium ainsi qu'au moins un substituant organique lié à un atome de silicium via une liaison carbone-silicium.

4. Procédé selon la revendication 1 ou 2, **caractérisé en ce que** la composition de promoteur d'adhérence comprend au moins un composé organique du titane, qui présente au moins un substituant lié à l'atome de titane via une liaison oxygène-titane.

5. Procédé selon la revendication 1 ou 2, **caractérisé en ce que** la composition de promoteur d'adhérence comprend
- au moins un composé organosilicié, qui présente au moins un groupe alcoxy lié à un atome de silicium ainsi qu'au moins un substituant organique lié à un atome de silicium via une liaison carbone-silicium,
ainsi que
- au moins un composé organique du titane, qui présente au moins un substituant lié à l'atome de titane via une liaison oxygène-titane.

6. Procédé selon la revendication 3 ou 5, **caractérisé en ce que** le composé organosilicié présente la formule (I) ou (II) ou (III) 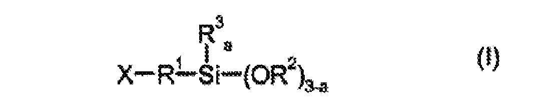 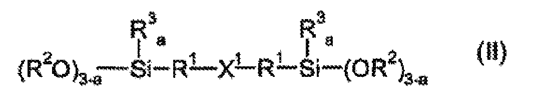 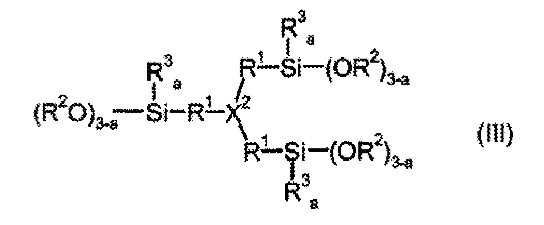 où
R¹ représente un groupe alkylène linéaire ou ramifié, le cas échéant cyclique, comprenant 1 à 20 atomes de carbone, le cas échéant avec des proportions aromatiques et le cas échéant avec un ou plusieurs hétéroatomes, en particulier des atomes d'azote ; et
R² représente un groupe alkyle comprenant 1 à 5 atomes de carbone, en particulier méthyle ou éthyle, ou un groupe acyle ; et
R³ représente un groupe alkyle comprenant 1 à 8 atomes de carbone, en particulier méthyle ; et
X représente H, ou un groupe fonctionnel, qui est choisi dans le groupe comprenant oxirane, OH, (méth)acryloxy, amine, SH, acylthio et vinyle, de préférence amine ; et
X¹ représente un groupe fonctionnel choisi dans le groupe comprenant NH, S, S₂ et S₄ ; et
X² représente un groupe fonctionnel choisi dans le groupe comprenant N et isocyanurate ; et
a représente une des valeurs 0, 1 ou 2, de préférence 0.

7. Procédé selon l'une quelconque des revendications 3 à 6, **caractérisé en ce que** la composition de promoteur d'adhérence comprend au moins un solvant présentant un point d'ébullition à 760 Torrs entre 25°C et 140°C, en particulier entre 50°C et 120°C, de préférence en 65°C et 99°C.

8. Procédé selon l'une quelconque des revendications précédentes, **caractérisé en ce que** le matériau synthétique est un polycarbonate, en particulier un polycarbonate aromatique.

9. Procédé selon l'une quelconque des revendications précédentes, **caractérisé en ce que** l'évacuation de l'air de la composition de silicone dure entre 5 minutes et 60 minutes, en particulier entre 5 et 30 minutes, de préférence entre 5 à 25 minutes.

10. Procédé selon l'une quelconque des revendications précédentes, **caractérisé en ce que** la cuisson est réalisée à une température entre 100 et 140°C, en particulier pendant un temps de cuisson de 30 à 90 minutes.

11. Procédé selon l'une quelconque des revendications précédentes, **caractérisé en ce que** l'application de la composition de promoteur d'adhérence sur la pellicule de silicone est réalisée pendant la cuisson, en particulier pendant la première moitié, en particulier pendant le premier tiers de la durée de cuisson, de préférence au cours de la fenêtre de temps entre la 1ère minute et la 30ème minute de la durée de cuisson.

12. Revêtement de silicone durci par voie thermique, **caractérisé en ce qu'**il est réalisé selon un procédé selon l'une quelconque des revendications 1 à 11.

13. Procédé pour coller ou rendre étanche des revêtements de silicone durcis thermiquement selon la revendication 12, **caractérisé en ce qu'**un adhésif ou une substance d'étanchéité est mis(e) en contact avec le revêtement de silicone durci par voie thermique sans qu'un apprêt adhésif n'ait été appliqué au préalable sur le revêtement de silicone durci par voie thermique.

14. Corps composite, qui est préparé par un procédé pour coller ou rendre étanche selon la revendication 13 et l'adhésif ou la substance d'étanchéité étant durci(e).

15. Utilisation d'une composition de promoteur d'adhérence, telle qu'elle est décrite dans les revendications 3 à 7 et avec utilisation d'un procédé selon les revendications 1-11 ou 13, pour améliorer l'adhérence d'adhésifs ou de substances d'étanchéité sur des revêtements en silicone.
